# EUROPEAN PATENT APPLICATION

(11) **EP 4 488 105 A1**
(43) Date of publication of application: **08.01.2025**
(21) Application number: 23183766.7
(22) Date of filing: 06.07.2023
(51) Int. Cl.: B60L 50/71, H01M 8/04007

(54) **AN ARRANGEMENT FOR HANDLING EXHAUST WATER OF A FUEL CELL SYSTEM OF A VEHICLE**

(71) Applicant: VOLVO TRUCK CORPORATION, 405 08 Göteborg (SE)
(72) Inventor: LÖNN, Nina, 423 63 Torslanda (SE); ANDERSSON, Arne, 435 42 Mölnlycke (SE)
(74) Representative: Valea AB

(57) **Abstract**

The present invention relates to an arrangement 200 and a method for handling exhaust water of a fuel cell system 110 of a vehicle 100, the vehicle 100 comprising a braking system 130 having at least one component 132 which generates heat during a braking event, the arrangement 200 comprising:
- a water tank 120 configured to collect and store exhaust water discharged from the fuel cell system 110,
- a vaporization arrangement 200' configured to vaporize the exhaust water into water vapor,
- a discharge arrangement 150 configured to discharge the water vapor out of the vehicle 100,
- wherein the vaporization arrangement 200' comprises a fluid circuit 210 configured to circulate a heat transfer fluid between the at least one component 132 of the braking system 130 and the water tank 120, such that the heat generated by the at least one component 132 of the braking system 130 is transferred to the water tank 120 via the heat transfer fluid to heat and to vaporize the exhaust water in the water tank 120.

## Description

### TECHNICAL FIELD

The disclosure relates generally to fuel cell electric vehicles. In particular aspects, the disclosure relates to an arrangement and a method for handling exhaust water of a fuel cell system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In recent years, fuel cell systems have been considered as power sources for producing electric power in different applications, e.g., in fuel cell electric vehicles (FCEVs). Typically, a fuel cell system is used together with an energy storage system for providing electric power to various components of the fuel cell electric vehicle. The electric power may, for example, be used for powering one or more electric motors to create a propulsion force to the fuel cell electric vehicle.

The fuel cell system relies on an electrochemical reaction between hydrogen fuel and oxygen from the air to generate electricity. During this process, water is produced as a byproduct, which may require management of the water generated within the fuel cell system.

### SUMMARY

According to a first aspect of the disclosure, an arrangement for handling exhaust water of a fuel cell system of a vehicle according to claim 1 is provided. The vehicle comprises a braking system having at least one component which generates heat during a braking event. The arrangement comprises:
- a water tank configured to collect and store exhaust water discharged from the fuel cell system,
- a vaporization arrangement configured to vaporize the exhaust water into water vapor,
- a discharge arrangement configured to discharge the water vapor out of the vehicle,
- wherein the vaporization arrangement comprises a fluid circuit configured to circulate a heat transfer fluid between the at least one component of the braking system and the water tank, such that the heat generated by the at least one component of the braking system is transferred to the water tank via the heat transfer fluid to heat and to vaporize the exhaust water in the water tank.

The first aspect of the disclosure may seek to convert the exhaust water into water vapor and subsequently expel the water vapor into the environment. A technical benefit may include a reduced risk of water freezing within the vehicle and/or freezing on a road surface in cold conditions. This technical benefit is achieved by the vaporization arrangement which includes a fluid circuit that circulates a heat transfer fluid between the at least one component of the braking system and the water tank. The heat transfer fluid may carry away the heat from the braking system components and transfer it to the water tank. Due to the heat transfer within the water tank, the water may eventually reach a temperature where it vaporizes. In this way, liquid water is converted into water vapor without requiring a dedicated heater for heating the exhaust water. Another technical benefit may include that it may efficiently and effectively dissipate the heat generated during braking events, thereby reducing the risk of overheating the braking system components.

Herein the heat transfer fluid may refer to any suitable fluid that may have a high thermal conductivity. As such, the fluid may exchange the heat energy with the at least one component of the braking system and/or the exhaust water efficiently and effectively.

Optionally in some examples, including in at least one preferred example, the fluid circuit is in the form of a loop comprising at least one pipe. The loop may be understood as a closed circuit or path formed by the fluid circuit. It may imply that the heat transfer fluid is circulated in a continuous loop, through the at least one pipe. The loop configuration may allow for the transfer of heat from the braking system components to the water tank in a repeated manner. As the heat transfer fluid flows through the loop, it may carry away heat from the braking system components and transfer it to the water tank repeatedly. A technical benefit may include an improved balance in terms of thermal management.

Optionally in some examples, including in at least one preferred example, the at least one pipe is a metal pipe. In general, metal has a relatively high thermal conductivity, which may improve the heat transfer between the heat transfer fluid in the pipe and the braking system components or between the fluid in the pipe and the exhaust water in the water tank.

Optionally in some examples, including in at least one preferred example, at least one pipe is arranged circuitously inside the water tank. In this way, a contact surface between the pipe and the exhaust water may be increased. As such, heat may be transferred between the heat transfer fluid in the pipe and the exhaust water in an efficient and effective manner, thereby promoting the exhaust water's temperature increase to the point of vaporization.

Optionally in some examples, including in at least one preferred example, the at least one pipe is spirally extended inside the water tank.

Optionally in some examples, including in at least one preferred example, the arrangement further comprises a heat exchanger, arranged to cool the heat transfer fluid prior to reaching the at least one component of the braking system, such that the heat transfer fluid subsequently cools the at least one component of the braking system when passing through the component. By providing the heat exchanger in the circuit, it may be possible to control and regulate a temperature of the heat transfer fluid, prior to reaching the at least one component of the braking system, and thereby to maintain a temperature of the braking system components within a desirable range. A technical benefit may include a reduced risk of overheating the braking system components.

Optionally in some examples, including in at least one preferred example, the arrangement further comprises a bypass circuit, configured to selectively bypass the heat transfer fluid from the heat exchanger. In certain scenarios where heat exchange is not required, the heat transfer fluid may be directed without passing through the heat exchanger. This may improve the flexibility in managing the heat transfer process.

Optionally in some examples, including in at least one preferred example, the at least one component of the braking system is a braking retarder and/or a braking resistor.

Optionally in some examples, including in at least one preferred example, the arrangement further comprises a water level sensor for detecting a water level of the exhaust water in the water tank. The water level sensor may allow for continuous monitoring of the water level in the water tank. Appropriate actions may be taken to maintain the water level within a desired range, e.g., lower than a threshold level. A technical benefit may include a reduced risk of overflow of water from the water tank.

Optionally in some examples, including in at least one preferred example, the discharge arrangement comprises a discharge pipe disposed in the water tank. In this way, the resulting water vapor may be expelled from the vehicle through the discharge pipe. A technical benefit may include a reduced risk of water freezing on a road surface in cold conditions.

Optionally in some examples, including in at least one preferred example, the heat transfer fluid is an oil-based fluid. Oil-based fluids generally have relatively high thermal stability and good heat transfer properties. The oil-based fluid may efficiently and effectively absorb heat from the braking system components and carry the heat to the water tank and/or to the heat exchanger.

According to a second aspect of the disclosure, a vehicle comprising a fuel cell system, a braking system, and an arrangement for handling exhaust water of the fuel cell system according to the first aspect is provided.

According to a third aspect of the disclosure, a method for handling exhaust water of a fuel cell system of a vehicle is provided. The vehicle comprises an auxiliary braking system and a regenerative braking system, the auxiliary braking system including at least one component which generates heat during a braking event. The vehicle further comprises an arrangement for handling exhaust water of a fuel cell system. The arrangement comprises:
- a water tank configured to collect and store exhaust water discharged from the fuel cell system,
- a vaporization arrangement configured to vaporize the exhaust water into water vapor,
- a discharge arrangement configured to discharge the water vapor out of the vehicle,
- wherein the vaporization arrangement comprises a fluid circuit configured to circulate a heat transfer fluid between the at least one component of the auxiliary braking system and the water tank.

The method comprises:
- discharging the exhaust water from the fuel cell system to the water tank,
- activating the auxiliary braking system such that the at least one component generates heat,
- circulating the heat transfer fluid between the at least one component of the auxiliary braking system and the water tank, such that the heat generated by the at least one component of the braking system is transferred to the water tank via the heat transfer fluid to heat and to vaporize the exhaust water in the water tank into water vapor, and
- discharging the water vapor out of the vehicle via the discharge arrangement.

The arrangement for handling exhaust water of a fuel cell system may be exemplified by any of the above-described examples of the first aspect. Thus, advantages and advantageous features of the method appear from the above description of the arrangement for handling exhaust water.

Optionally in some examples, including in at least one preferred example, the at least one component of the auxiliary braking system is a braking retarder and/or a braking resistor. A braking retarder may typically operate by converting the vehicle's kinetic energy into heat energy, thus allowing the vehicle 100 to sustain its speed while, for example, going downhill. The braking retarder may produce a large amount of heat during a braking event. By employing the above-described method, it may be possible to dissipate the heat produced by the braking retarder effectively. In another example, the at least one component further comprises a braking resistor, which may be arranged to convert excessive electrical energy produced by an electric motor into heat during a regenerative braking event.

Optionally in some examples, including in at least one preferred example, activating the auxiliary braking system is performed during a braking event when a predetermined condition is fulfilled.

Optionally in some examples, including in at least one preferred example, the predetermined condition is considered fulfilled if batteries of an energy storage system of the vehicle are fully charged during a braking event. When the batteries of the energy storage system are fully charged, the regenerative braking system may be automatically deactivated, the auxiliary braking system may be initiated to facilitate the vehicle's braking process. The braking retarder may come into operation to further assist in slowing down the vehicle. Alternatively, or additionally, the excessive electrical energy produced by an electric motor during the regenerative braking may be converted to heat by the braking resistor.

Optionally in some examples, including in at least one preferred example, the predetermined condition is considered fulfilled if a water level of the water tank exceeds a threshold level. In this case, the regenerative braking system may be forced to be deactivated, and the auxiliary braking system may be initiated to facilitate the vehicle's braking process, such that sufficient heat is generated and transferred to the water tank for vaporizing the exhaust water. A technical benefit may include a reduced risk of overflow of water from the water tank.

Optionally in some examples, including in at least one preferred example, the vehicle further comprises a heat exchanger, arranged to cool the heat transfer fluid prior to reaching to the at least one component of the auxiliary braking system, such that the heat transfer fluid subsequently cools the at least one component of the auxiliary braking system when passing through the at least one component, the method further comprising bypassing the heat transfer fluid from the heat exchanger when a temperature of the heat transfer fluid is lower than a threshold value. When the temperature is not sufficiently high to effectively heat and vaporize the exhaust water in the water tank, it may be beneficial to preserve the fluid's temperature by diverting it away from the heat exchanger. By allowing the fluid to bypass the heat exchanger, it may be possible to increase the temperature to a sufficiently high level as it traverses the at least one component of the auxiliary braking system once again. This elevated temperature may enable the fluid to effectively heat and vaporize the exhaust water that has been collected in the water tank.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of an exemplary vehicle comprising a fuel cell system in accordance with an example of the present disclosure.
**FIG. 2** is a diagram illustrating another example of a vehicle comprising an arrangement for handling exhaust water of the fuel cell system in accordance with an example of the present disclosure.
**FIG. 3** is a schematic view illustrating an exemplary piping arrangement within a water tank with an example of the present disclosure.
**FIG. 4** is a flowchart illustrating an exemplary method of handling exhaust water of the fuel cell system, in accordance with an example of the present disclosure.

### DETAILED DESCRIPTION

The detailed description set forth below provides information and examples of the disclosed technology with sufficient detail to enable those skilled in the art to practice the disclosure.

In recent years, fuel cell systems have been considered as power sources for producing electric power in different applications, e.g., in fuel cell electric vehicles (FCEVs). Typically, a fuel cell system is used together with an energy storage system for providing electric power to various components of the fuel cell electric vehicle. The electric power may be used for powering one or more electric motors to create a propulsion force to the fuel cell electric vehicle.

The fuel cell system relies on an electrochemical reaction between hydrogen fuel and oxygen from the air to generate electricity. During this process, water is produced as a byproduct, which may require management of the water generated within the fuel cell system.

The present disclosure may seek to convert the exhaust water into water vapor and subsequently expel the water vapor into the environment. A technical benefit may include a reduced risk of water freezing within the vehicle and/or freezing on a road surface in cold conditions. In particular, it may seek to convert the liquid water into water vapor without requiring a dedicated heater.

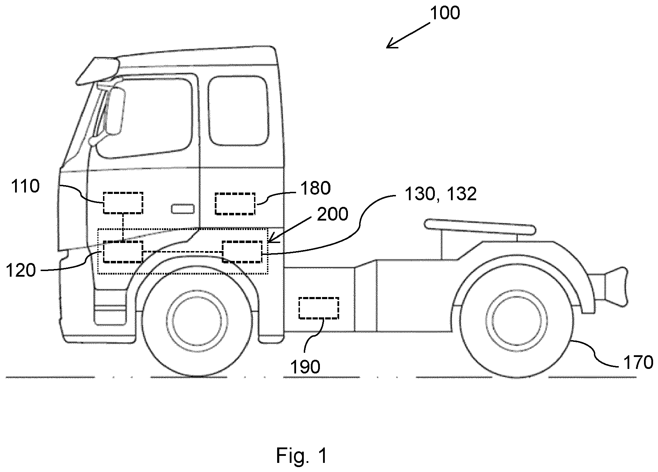

**FIG. 1** depicts a vehicle 100, which is exemplified by a fuel cell electric truck. Even though a fuel cell electric truck is shown, it shall be noted that the disclosure is not limited to this type of vehicle, but it may also be used for other fuel cell electric vehicles, such as a bus, or construction equipment, e.g., a wheel loader or an excavator.

The vehicle 100 comprises a fuel cell system 110 and an electric energy storage system 180, typically comprising one or more batteries (not shown). The fuel cell system 110 is adapted to produce electric power through an electrochemical reaction between hydrogen fuel and oxygen sourced from the air. During this process, water is produced as a byproduct and is continuously collected and directed to a water tank 120. The produced electric power may then be fed to one or more electric motors 190, which are configured for providing propulsion power to driven wheels 170 of the vehicle 100. The electric power produced by the fuel cell system 110 may also be used to charge the one or more batteries of the energy storage system 180. Power stored in the electric energy storage system 180 may further be fed to the one or more electric motors 190.
The vehicle 100 further comprises a braking system 130 having one or more components 132, arranged to slow down the vehicle 100 or bring the vehicle 100 to a complete stop. The braking system 130 may further comprise several sub-systems including an auxiliary braking system (not shown) and a regenerative braking system (not shown). When the regenerative braking system is activated, the one or electric motors 190 may operate in a reverse mode, causing the motor(s) 190 to run backwards and thereby slowing the driven wheels 170. The electric motor(s) 190 may, in this mode, function as a generator, configured for producing electric power that may then be fed into the one or more batteries of the energy storage system 180. When the batteries are fully charged, a braking resistor, arranged in the auxiliary braking system, may be used to convert excessive electrical energy produced by the electric motor(s) 190 into heat, effectively dissipating the excess energy and preventing overcharging of the batteries. The auxiliary braking system may further comprise a braking retarder, which may typically operate by converting the vehicle's kinetic energy into heat energy, thus allowing the vehicle 100 to sustain its speed while, for example, going downhill.

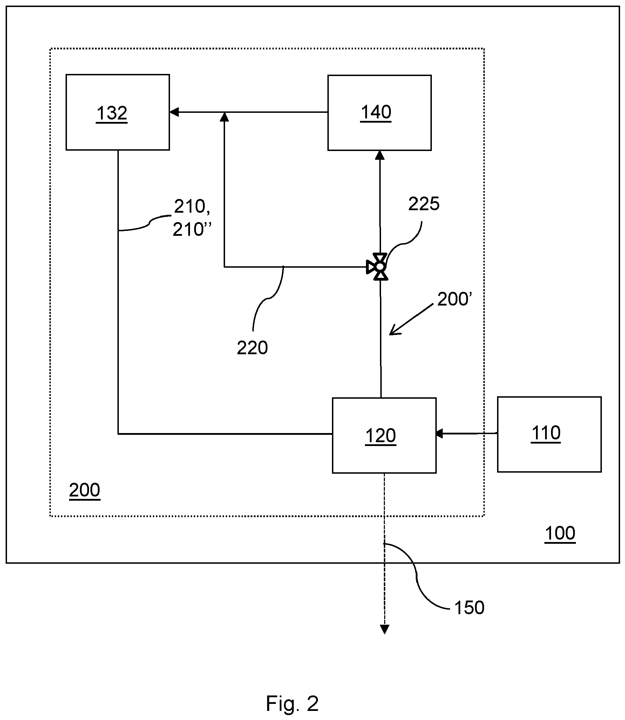

The vehicle 100 further comprises an arrangement 200 for handling the exhaust water discharged from the fuel cell system 110, which is illustrated in **FIG. 2****.** The arrangement 210 will be described in detail along with **FIG. 2****.**

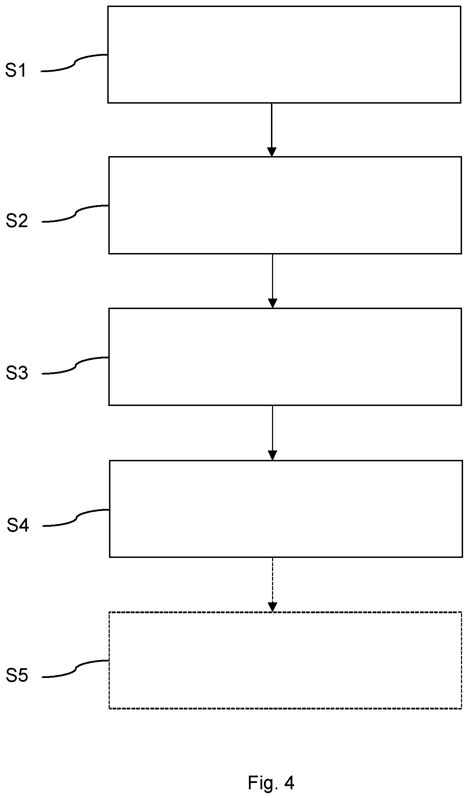

The vehicle 100 may further comprise a control system (not show), configured to regulate the operation of the arrangement 200 using a method according to an example of the disclosure. The exemplary method is illustrated in **FIG. 4****,** and will be described in detail in conjunction with the accompanying figure.

As illustrated in **FIG. 2****,** the arrangement 200 comprises a water tank 120 that is configured to collect and store exhaust water of the fuel cell system 110. During operation of the fuel cell system 110, the exhaust water may be continuously collected and directed to the water thank 120 through a dedicated pipe (not shown). The temperature of the collected water may typically range from 60°C to 70°C. The arrangement 200 further comprises a vaporization arrangement 200' and a discharge arrangement 150. The vaporization arrangement 200' is configured to vaporize the exhaust water into water vapor and the discharge arrangement 150 is configured to discharge the water vapor out of the vehicle 100, respectively. Specifically, the vaporization arrangement 200' comprises a fluid circuit 210, which circulates a heat transfer fluid between at least one component 132 of the braking system 130, e.g., the braking retarder, and the water tank 120, such that the heat generated by the at least one component 132 of the braking system 130 is transferred to the water tank 120 via the heat transfer fluid to heat and to vaporize the exhaust water in the water tank 120.

In the illustrated example shown in **FIG. 2****,** the fluid circuit 210 is formed of a loop 210" with a flow direction indicated by the arrow in **FIG. 2****.** The arrangement 200 further comprises a heat exchanger 140, arranged in the loop 210" between the water tank 120 and the at least one component 132 of the braking system 130. The heat exchanger 140 may be arranged to cool the heat transfer fluid as it flows out of the water tank 120, reducing the temperature of the heat transfer fluid to a desired level prior to reaching the at least one component 132 of the braking system 130. The heat transfer fluid may subsequently cool the at least one component 132 of the braking system 130 when passing through it/them. The arrangement 200 may further comprise a bypass circuit 220 provided with a control valve 225, allowing the heat transfer fluid to bypass the heat exchanger 140 when necessary, for example, when the temperature of the heat transfer fluid falls below a predefined threshold.

In some preferred examples, the at least one component 132 of the braking system 130 is a braking retarder, and the heat transfer fluid is an oil-based fluid. In these examples, when the braking retarder is engaged during a braking event and when the oil-based fluid is circulated within the loop 210, the temperature of the oil-based fluid may raise to 160 °C after exiting the braking retarder. Thereafter, the oil-based fluid flows into the water tank 120, transferring heat to the exhaust water contained within the water tank 120. As mentioned earlier, the exhaust water in the water tank 120 typically ranges between 60 °C and 70 °C, and due to the heat transfer, the water may eventually reach a temperature where it vaporizes. The vaporized water may then be expelled from the vehicle 100 through the discharge arrangement 150, such as a discharge pipe, allowing the vaporized water to be safely released outside the vehicle 100. The oil-based fluid may then continue its flow into the heat exchanger 140. In the heat exchanger 140, the oil-based fluid may undergo a heat exchange process, allowing the oil-based fluid to transfer heat to the surrounding environment or another fluid within the heat exchanger 140. This exchange of heat within the heat exchanger 140 may cause the temperature of the oil-based fluid to subsequently reduce to a desired level. Once the oil-based fluid has been cooled to the desired temperature, it may flow back to the braking retarder, enabling the oil-based fluid to consistently cool the braking retarder during subsequent braking events, preventing overheating of the braking reader. As the braking retarder is activated during braking events, the oil-based fluid may be recirculated within the loop 210" in a repeated manner. In certain situations where the temperature of the oil-based fluid is lower than a predefined threshold level, such as at the start of a braking event, it may be beneficial to preserve the fluid's temperature by diverting it away from the heat exchanger 140. By allowing the oil-based fluid to bypass the heat exchanger 140, it may be possible to increase the temperature to a sufficiently high level as it traverses the braking retarder once again. This elevated temperature may enable the oil-based fluid to effectively heat and vaporize the exhaust water that has been collected in the water tank 120.

In some less preferred examples, the at least one component 132 of the braking system 130 is a braking resistor. As mentioned above, the braking resistor may convert excessive electrical energy produced by the electric motor(s) 190 into heat during regenerative braking events. The heat may be utilized to aid in the evaporation of the exhaust water using the arrangement 200. As another non-limiting example, the at least one component 132 of braking system 130 may comprise both the braking retarder and the braking resistor. In this example, the braking resistor and braking retarder may be arranged in parallel, allowing the heat transfer fluid to pass through them simultaneously. After collecting the heat from both the braking retarder and the braking resistor, the heat transfer fluid may then carry the heat and flow into the water tank 120.

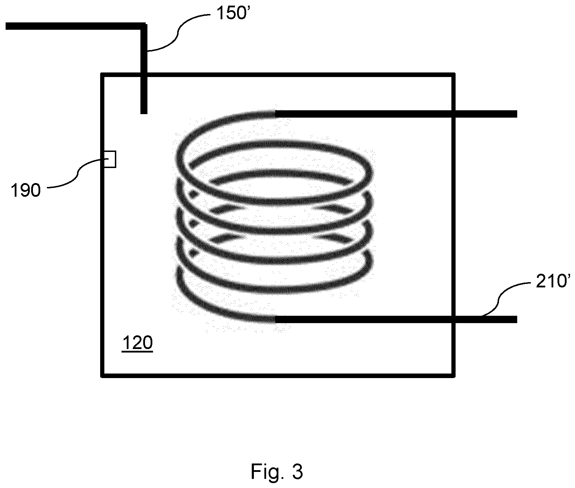

**FIG. 3** shows an exemplary piping arrangement within the water tank 120. The fluid circuit 210 described in **Fig. 2** is in the form of a loop 210" which may comprise at least one pipe 210'. The pipe 210' is preferably a metal pipe, which may allow the heat transfer between the heat transfer fluid in the pipe 210' and the at least one component 132 or between the fluid in the pipe 210' and the exhaust water in the water tank 120 efficiently and effectively. The pipe 210' is preferably arranged circuitously inside the water tank 120, which may increase a contact surface between the pipe 210' and the water, thereby enhancing the heat transfer between the fluid in the pipe 210' and the exhaust water may be improved. In the illustrated example in **FIG. 3****,** the pipe 210' is spirally extended inside the water tank 120.

When the temperature of the oil-based fluid within the pipe 210' surpasses the boiling point of 100°C, boiling phenomena transpires on the surface of the pipe 210', which may occur in close proximity to the pipe 210'. As the boiling transpires and the water vaporizes, more water from the water tank 210 is drawn towards the surface of the pipe 210'. The incoming water is subjected to heating by the pipe 210'and subsequently undergoes vaporization, perpetuating the cycle. This cyclic process may repeat as long as the oil-based fluid temperature within the pipe 210' remains above the boiling point.

Moreover, as shown in **FIG. 3****,** a discharge pipe 150' is positioned within the water tank 120. The discharge pipe 150' may be configured to guide the vaporized water out of the vehicle 100. Furthermore, a water level sensor 190 is arranged for detecting a water level of the exhaust water in the water tank 120. The water level sensor 190 may allow for continuous monitoring of the water level in the water tank 120. When the water level is higher than a threshold value, appropriate actions may be taken to maintain the water level within a desired range. The appropriate actions will be discussed in detail along with **FIG. 4****,** which illustrates an exemplary method of handling exhaust water of the fuel cell system 110.

**FIG. 4** is a flowchart illustrating an exemplary method of handling exhaust water of the fuel cell system 110. The method may be applied to any type of fuel cell electric vehicles, e.g., the truck 100 shown in **FIG. 1****.** The method may be performed by a control system of the vehicle 100. The method comprises the steps listed in the following, which, unless otherwise indicated, may be taken in any suitable order.

**S1:** discharging the exhaust water from the fuel cell system 110 to the water tank 120. During operation of the fuel cell system 110, the exhaust water may be continuously collected and be directed to the water tank 120 through a dedicated pipe. The temperature of the collected water may typically range from 60°C to 70°C.

**S2:** activating the auxiliary braking system such that the at least one component 132 of the auxiliary braking system generates heat. When the vehicle 100 initiates a braking process, typically, the regenerative braking system is engaged, and the one or more electric motor(s) 190 may operate in a reverse mode and thereby decelerating the driven wheels 170. In this mode, the one or more motors 190 may function as generators, producing electrical energy that may then be fed to the one or more batteries of the energy storage system 180 for storage.

Once the batteries of the energy storage system 180 reach their full capacity, the auxiliary brake system may automatically be activated. The braking retarder may then come to operation, generating a significant amount of heat as it assists in slowing down the vehicle 100. Alternatively, or additionally, excessive electrical energy may be produced during the regenerative braking process, which may be transferred to the braking resistor. The braking resistor may then dissipate this excess energy as heat.

Moreover, the auxiliary brake system may automatically be activated if the water level in the water tank 120 is higher than a threshold value. In this case, irrespective of a state-of-energy state of the energy storage system 180, the regenerative braking system may be forced to be deactivated, such that the braking retarder and/or the braking resistor is engaged and generates heat during the braking event. The water level may be constantly monitored by the water level sensor 190 arranged within the water tank 120.

**S3:** circulating the heat transfer fluid between the at least one component 132 of the auxiliary braking system and the water tank 120, such that the heat generated by the at least one component 132 of the auxiliary braking system is transferred to the water tank 120 via the heat transfer fluid to heat and to vaporize the exhaust water in the water tank 120 into water vapor.

In some examples, the heat transfer fluid is circulated within a loop 210". For instance, when the at least one component 132, e.g., the braking retarder, is engaged during a braking event, the heat transfer fluid may be circulated within the loop 210" in a repeated manner. The temperature of the heat transfer fluid may raise to 160 °C after exiting the braking retarder. Thereafter, the heat transfer fluid may flow into the water tank 120, transferring heat to the exhaust water contained within the water tank 120. Due to the heat transfer, the water may reach a temperature where it vaporizes.

**S4:** discharging the water vapor out of the vehicle 100 via the discharge arrangement 150. The discharge arrangement 150 may comprise a discharge pipe 150', configured to guide the water vapor to the surrounding environment, allowing the vaporized water to be safely released outside the vehicle 100.

The method further comprises an option step S5: bypassing the heat transfer fluid from the heat exchanger 140 when a temperature of the heat transfer fluid is lower than a threshold value.

In some examples, a heat exchanger 140 is arranged in the loop 210" between the water tank 120 and the at least one component 132 of the braking system 130. The heat exchanger 140 may be arranged to cool the heat transfer fluid as it flows out of the water tank 120, reducing the temperature of the heat transfer fluid to a desired level prior to reaching the at least one component 132 of the braking system 130. In certain situations where the temperature of the heat transfer fluid is lower than a predefined threshold level, such as at the start of a braking event, it may be beneficial to preserve the fluid's temperature by diverting it away from the heat exchanger 140. By allowing the heat transfer fluid to bypass the heat exchanger 140, it may be possible to increase the temperature to a sufficiently high level as it traverses the at least one component 132 once again. This elevated temperature may enable the heat transfer fluid to effectively heat and vaporize the exhaust water that has been collected in the water tank 120.

The terminology used herein is for the purpose of describing particular aspects only and is not intended to be limiting of the disclosure. As used herein, the singular forms "a" "an" and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An arrangement (200) for handling exhaust water of a fuel cell system (110) of a vehicle (100), the vehicle (100) comprising a braking system (130) having at least one component (132) which generates heat during a braking event, the arrangement (200) comprising:
- a water tank (120) configured to collect and store exhaust water discharged from the fuel cell system (110),
- a vaporization arrangement (200') configured to vaporize the exhaust water into water vapor,
- a discharge arrangement (150) configured to discharge the water vapor out of the vehicle (100),
- wherein the vaporization arrangement (200') comprises a fluid circuit (210) configured to circulate a heat transfer fluid between the at least one component (132) of the braking system (130) and the water tank (120), such that the heat generated by the at least one component (132) of the braking system (130) is transferred to the water tank (120) via the heat transfer fluid to heat and to vaporize the exhaust water in the water tank (120).

2. The arrangement (200) according to claim 1, wherein the fluid circuit (120) is in the form of a loop (210") comprising at least one pipe (210').

3. The arrangement according to claim 2, wherein the at least one pipe (210') is arranged circuitously inside the water tank (120).

4. The arrangement according to claim 3, wherein the at least one pipe is spirally extended inside the water tank (120).

5. The arrangement according to any one of claims 2-4, further comprising a heat exchanger (140), arranged to cool the heat transfer fluid prior to reaching the at least one component (132) of the braking system (130), such that the heat transfer fluid subsequently cools the at least one component (132) of the braking system (130) when passing through said component (132).

6. The arrangement according to claim 5, further comprising a bypass circuit (220), configured to selectively bypass the heat transfer fluid from the heat exchanger (140).

7. The arrangement according to any one of the proceeding claims, wherein the at least one component (132) is a braking retarder and/or a braking resistor.

8. The arrangement according to any one of the proceeding claims, further comprising a water level sensor (190) for detecting a water level of the exhaust water in the water tank (120).

9. A vehicle (100) comprising a fuel cell system (110), a braking system (130), and an arrangement (200) for handling exhaust water of the fuel cell system (110) according to any one of claims 1-8.

10. A method for handling exhaust water of a fuel cell system (110) of a vehicle (100), the vehicle (100) comprising an auxiliary braking system and a regenerative braking system, the auxiliary braking system including at least one component (132) which generates heat during a braking event, the vehicle (100) further comprises an arrangement (200) for handling exhaust water of the fuel cell system (110), wherein the arrangement (200) comprises:
- a water tank (120) configured to collect and store exhaust water discharged from the fuel cell system (110),
- a vaporization arrangement (200) configured to vaporize the exhaust water into water vapor,
- a discharge arrangement (150) configured to discharge the water vapor out of the vehicle (100),
- wherein the vaporization arrangement (200') comprises a fluid circuit (210) configured to circulate a heat transfer fluid between the at least one component (132) of the auxiliary braking system and the water tank (120),
the method comprising:
- discharging (S1) the exhaust water from the fuel cell system (110) to the water tank (120),
- activating (S2) the auxiliary braking system such that the at least one component (132) of the auxiliary braking system generates heat,
- circulating (S3) the heat transfer fluid between the at least one component (132) of the auxiliary braking system and the water tank (120), such that the heat generated by the at least one component (132) of the auxiliary braking system is transferred to the water tank (120) via the heat transfer fluid to heat and to vaporize the exhaust water in the water tank (120) into water vapor, and
- discharging (S4) the water vapor out of the vehicle (100) via the discharge arrangement (150).

11. The method for handling exhaust water of a fuel cell system (110) of a vehicle (100) according to claim 10, wherein the at least one component (132) of the auxiliary braking system is a braking retarder and/or a braking resistor.

12. The method for handling exhaust water of a fuel cell system (110) of a vehicle (100) according to any one of claims 10-11, wherein activating (S1) the auxiliary braking system is performed during a braking event when a predetermined condition is fulfilled.

13. The method for handling exhaust water of a fuel cell system (110) of a vehicle (100) according to claim 12, wherein the predetermined condition is considered fulfilled if batteries of an energy storage system (180) of the vehicle (100) are fully charged during a braking event.

14. The method for handling exhaust water of a fuel cell system (110) of a vehicle (100) according to claim 12, wherein the predetermined condition is considered fulfilled if a water level of the water tank (120) exceeds a threshold level.

15. The method for handling exhaust water of a fuel cell system (110) of a vehicle (100) according to any one of claims 10-14, wherein the vehicle (100) further comprises a heat exchanger (140), arranged to cool the heat transfer fluid prior to reaching to the at least one component (132) of the auxiliary braking system (131), such that the heat transfer fluid subsequently cools the at least one component (132) of the auxiliary braking system (131) when passing through the at least one component (132), the method further comprising bypassing (S4) the heat transfer fluid from the heat exchanger (140) when a temperature of the heat transfer fluid is lower than a threshold value.
